(19) Europäisches Patentamt
European Patent Office
Office européen des brevets

(11) Publication number: **0 149 765**
**B1**

(12) **EUROPEAN PATENT SPECIFICATION**

(45) Date of publication of patent specification: **28.03.90**

(21) Application number: **84114533.7**

(22) Date of filing: **30.11.84**

(51) Int. Cl.$^5$: **C 08 G 18/10,** C 08 G 18/72, C 08 G 18/76, C 08 G 18/32, C 09 D 175/04

(54) **Coating compositions containing a ketimine.**

(30) Priority: **11.01.84 US 570047**

(43) Date of publication of application: **31.07.85 Bulletin 85/31**

(45) Publication of the grant of the patent: **28.03.90 Bulletin 90/13**

(84) Designated Contracting States: **AT BE CH DE FR GB IT LI NL SE**

(56) References cited:
**BE-A- 682 582**
**FR-A-1 461 924**
**FR-A-1 560 492**
**FR-A-2 362 171**
**GB-A-1 064 841**
**GB-A-1 073 209**
**US-A-3 290 350**

(73) Proprietor: **AMERICAN CYANAMID COMPANY**
**1937 West Main Street P.O. Box 60**
**Stamford Connecticut 06904-0060 (US)**

(72) Inventor: **Arendt, Volker Dietrich**
**8 Monroe Court, RD 4**
**Princeton New Jersey 08540 (US)**

(74) Representative: **Wächtershäuser, Günter, Dr.-**
**Tal 29**
**D-8000 München 2 (DE)**

**EP 0 149 765 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to surface coatings containing urethane groups. More particularly, it relates to two-component polyurethane surface coatings curable at room temperature. Such compositions provide moisture-hardening-type coatings which excel in weather resistance and flexibility and which do not develop coating film defects such as foaming even under an environment of high humidity. The compositions have long pot lives.

Background of the Invention

Heat-curable polyisocyanate compositions provide polyurethanes on curing into decorative and protective coatings, but, especially for large objects (e.g., automobile repair, industrial maintenance coatings), it is impractical to subject the coating structure to oven baking to effect good cure.

Room temperature curing of polyurethane surface coating is known, in particular polyurethane surface coatings derived from aliphatic isocyanates. However, these are normally of low reactivity so it is difficult to achieve good room temperature cures with coatings containing this class of isocyanates.

Moreover, polyurethane coating materials have rather poor weather resistance when aromatic isocyanates are used, and hardening speed at room temperature is slow if aliphatic or alicyclic isocyanates are used for the purpose of improving the weather resistance. Furthermore, if a catalyst is used to increase hardening rate, reaction between moisture in the air and the isocyanate occurs and coating film defects such as foaming develop, and pot life is shortened. Thus, there is a major need to provide improved compositions containing aliphatic NCO groups.

GB—A—10 64 841 discloses two-component moisture-curable compositions comprising an aliphatic NCO component and a polyketimine. US—A—32 90 350 describes α,α,α',α'-tetramethylxylylene diisocyanates and α,α-dimethylisopropenylbenzyl isocyanates and the preparation thereof.

It is the object of the present invention to provide improved moisture-curable coating compositions containing aliphatic NCO groups.

This object is solved according to the present invention by providing a moisture-curable composition comprising the components.

a. (i) A prepolymer polyurethane reaction product of an α,α,α',α'-tetramethylxylene diisocyanate and at least one polyol, said prepolymer having at least two isocyanate groups unreacted, or

(ii) a prepolymer vinyl addition product of an isocyanate having the formula

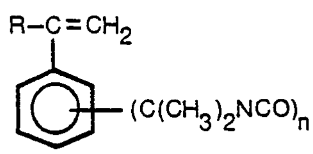

wherein R is hydrogen or alkyl and n is one or two and at least one other ethylenic unsaturated comonomer; and

b. a ketimine of a polyamine with at least two primary amino groups having at least one of its amino groups blocked by reaction with a ketone.

Preferred embodiments of the invention are defined in the subclaims. A preferred embodiment of the invention is a moisture-hardening type composition, wherein the component a. (i) is the reaction product of the defined isocyanate with one or more of a polyester or a polyether or a polyacrylate or a polymethacrylate, having hydroxyl functionality.

A more particularly preferred embodiment of this invention is a coating composition which is obtained by compounding,

(a) an isocyanate-group-containing copolymer which is obtained by copolymerizing 2 to 50 mole % of a monomer which possesses the structure of general formula,

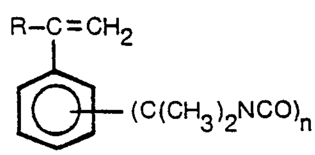

(in the formula, R is hydrogen or an alkyl group, n is an integer of 1 or 2), and 98 to 50 mole % of an ethylenic unsaturated monomer which is copolymerizable with the above-mentioned monomer, and,

(b) a ketimine compound where at least one of the amino groups of polyamine compound which contains two or more primary amino groups in one molecule has been blocked by reaction with a ketone.

The latter composition possesses a long usable time in a system where water is absent. On the other hand when it has been coated onto the article to be protected, it reacts with moisture from the air and immediately undergoes a hardening reaction. In such compositions there is excellent balance between the usable time and hardening rate and, at the same time, protective films can be formed which are outstanding in weather resistance and flexibility.

Detailed Description of the Invention

In the broadest aspect, polymeric isocyanate (a) may be any adduct of a defined di- or polyisocyanate, preferably with a stoichiometric insufficiency of a polyol, preferably a diol or triol, or of a hydroxyl-containing polymer, such as an acrylic polymer, a polyester, or a polyether reacted with about one mole of the diisocyanate (NCO) per equivalent of hydroxyl (OH).

Likewise, broadly, the ketimine (b) may be derived from the reaction of a di- or polyamine, preferably an aliphatic polyamine, having at least two primary amino ($-NH_2$) groups, e.g., ethylenediamine, 1,6-hexanediamine, and any ketone, for example, acetone, methyl ethyl ketone and the like. Optionally, water formed in the reaction $R-NH_2+R'_2CO \rightleftharpoons R'_2\ C=N-R + H_2O$, can be removed to improve pot life.

Polyols suitable for preparing prepolymer component (a) include monomer polyols, such as ethylene glycol, propylene glycol, diethylene glycol, triethylene glycol, dipropylene glycol, trimethylene glycol, 1,3- and 1,4-butanediol, 1,5-pentanediol, 1,2-hexylene glycol, 1,10-decandediol, 1,2-cyclohexanediol, 2-butene-1,4-diol, 3-cyclohexane-1,1-dimethanol, 4-methyl-3-cyclohexane-1,1-dimethanol, 3-methylene-1,5-pentanediol, (2-hydroxyethoxy)-1-propanol, 4-(2-hydroxyethoxy)-1-butanol, 5-(2-hydroxypropoxy)-1-pentanol, 1-(2-hydroxy-methoxy)2-hexanol, 1-(2-hydroxypropoxy)-2-octanol, 3-allyloxy-1,5-pentanediol, 2-allyloxymethyl-2-methyl-1,3-pentanediol, [(4,4-pentyloxy)-methyl]-1,3-propanediol, 3-(o-propenyl-phenoxy)-1,2-propanediol, 2,2'-diisopropylidene-bis-(p-phenyleneoxy)diethanol, glycerin, 1,2,6-hexanetriol, 1,1,1-trimethylolethane, 1,1,1-trimethylolpropane, 3-(2-hydroxyethoxy)-1,2-propanediol, 3-(2-hydroxypropyl)-1,2-propanediol, 2,4-dimethyl-2-(2-hydroxyethoxy)-methyl-pentanediol-1,5, 1,1,1-tris[(2-hydroxyethoxy) methyl]ethane, 1,1,1-tris[(2-hydroxypropoxy)methyl]propane, pentaerythritol, sorbitol, sucrose, lactose, α-methyl glucoside, α-hydroxyalkyl glucosides, novolac resins, hydroxy-terminated caprolactone, and the like. Preferred is 1,1,1-trimethylolpropane.

The compositions containing polyester polyurethane and/or polyether polyurethane resins having non-aromatic (i.e., alipatic) isocyanate groups are obtained by polycondensing a hydroxyl-containing polyester or polyether with a defined polyisocyanate in excess. Illustrative hydroxyl terminated polyesters are reaction products of polyhydric alcohols, such as ethylene glycol, propylene glycol, diethylene glycol, dipropylene glycol, 1,4-butanediol, 1,3-butanediol, pentanediol, 1,6-hexanediol, dodecanediol, polyethylene glycol, polypropylene glycol, polytetramethylene glycol, neopentyl glycol, 2,2,4-trimethyl-pentanediol, hydrogenated bisphenol A, propylene oxide addition product of bisphenol A, glycerin, trimethylolethane, trimethylolpropane, pentaerythritol, and trishydroxyethyl isocyanurate, and a polycarboxylic acid, polycarboxylic acid anhydride, or alkyl ester of a polycarboxylic acid, such as phthalic anhydride, isophthalic acid, terephthalic acid, dimethyl terephthalic acid, succinic acid, adipic acid, azelaic acid, dodecanedioic acid, eicosanedioic acid, dimer acid, maleic anhydride, fumaric acid, itaconic acid, tetrahydrophthalic acid, anhydrous hexahydrophthalic acid, Hymic acid anhydride, methyl Nadic acid anhydride, trimellitic anhydride, pyromellitic anhydride, and butanetetracarboxylic acid, in a mixing proportion where the hydroxyl groups are in excess. Also permissible in combination are, e.g., monobasic acids such as fatty acids, benzoic acid, and tertiary butyl benzoic acid, monoalcohols such as octanol, lauryl alcohol, and oleyl alcohol, hydroxycarboxylic acids such as hydroxystearic acid, parahydroxybenzoic acid, and metahydroxybenzoic acid. In addition, polycaprolactone, which is a ring-opened, hydroxy-terminated polymer of α-caprolactone, is extremely useful. Although the number-average molecular weight of the above-mentioned hydroxyl-group-terminated polyester can vary widely, the range of 200 to 5,000 is preferred and it is especially preferred that it be a low molecular weight substance of 300 to 2,000.

As the aforementioned hydroxyl-terminated polyether, there can be used, e.g., polyoxyethylene, polyoxypropylene, polyoxyethylene propylene copolymer polyether, and polytetramethylene glycol, and the like. In addition to simple linear polyethers, polyfunctional polyethers which possess at least 3 hydroxyl groups at the molecular terminal, with a branched structure possessing a polyhydric alcohol such as glycerin or pentaerythritol, or a polyamine such as ethylenediamine in the skeleton, can be used. Hydroxyfunctional polymers of other types can be used also, especially the hydroxy poly methacrylates. These are available commercially, or can be made in known ways. Especially useful is a commercial hydroxyl-containing polycrylate available from Henkel, under the tradename G-Cure 867.

The isocyanate starting material comprises a compound wherein the isocyanate group is not directly bonded to an aromatic ring. Aromatic groups are permitted elsewhere in the structure, however. Illustratively included are alicyclic diisocyanates such as isophorone diisocyanate, hydrogenated diphenylmethane diisocyanate (MDI), hydrogenated toluene-diisocyanate (TDI), hydrogenated xylene diisocyanate, and the like; aliphatic polyisocyanates, such as hexamethylene diisocyanate, lysine diisocyanate, and the like, and, in addition, aromatic ring-containing polyisocyanates wherein the NCO group is not directly bonded to the aromatic ring, such as xylene diisocyanate, α,α,α',α'-tetramethyl xylylene diisocyanate, α,α,α',α'-tetramethylnaphthylene diisocyanate, and the like. Isocyanates wherein the NCO's are directly bonded to aromatic rings, such as toluene diisocyante, diphenylmethane diisocyanate, naphthylene diisocyanate, and the like, are not suitable for this invention. Preferred compounds have isocyanate groups bonded to secondary or tertiary aliphatic carbon atoms. Especially preferred is α,α,α',α'- tetramethyl-meta-xylylene diisocyanate (also known as m—TMXDI).

The low polymers (a) can have a molecular weight which varies broadly, but preferably it will be in the range of 400 to 10,000. The low polymers are obtained by condensing an excess of polyisocyanate with the hydroxy-compound; usually under heating at 40 to 150°C, for example. The proportion of mixing the

hydroxyl groups and isocyanate groups is conventional and well known, but usually in the range of 1:1.3 to 1:2.5 and preferably 1:1.5 to 1:2.0 (—OH to —NCO).

In one aspect of the invention, monomers which possess the general formula structure,

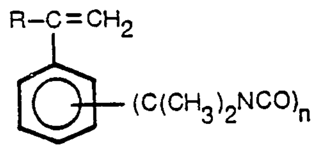

wherein R is hydrogen or an alkyl, e.g., $C_1$—$C_6$ alkyl, and n is an integer of 1 to 2, can be mentioned, e.g., p-isopropenyl-α,α-dimethylbenzyl isocyanate, p-ethylenyl-α,α-dimethylbenzyl isocyanate, m-ethylenyl-α,α-dimethylbenzyl isocyanate, isopropenyl-α,α,α',α'-tetramethylxylylene diisocyanate, ethylenyl-α,α,α',α'-tetramethylxylyene diisocyanate, etc. The proportion of the isocyanate-group-containing monomers for the aforementioned copolymer is about 2 to 50 mole %, preferably, 5 to 40, and especially preferably, 10 to 30, mole %.

Illustrative ethylenic unsaturated monomers which are copolymerizable with the aforementioned monomers, are acrylic acid esters, such as methyl acrylate, ethyl acrylate, propyl acrylate, butyl acrylate, 2-ethylhexyl acrylate, lauryl acrylate, oleyl acrylate, cyclohexyl acrylate, tetrahydrofurfuryl acrylate, 2-hydroxyethyl acrylate, and 2-hydroxypropyl acrylate; methacrylic acid esters such as methyl methacrylate, ethyl methacrylate, propyl methacrylate, butyl methacrylate, 2-ethylhexyl methacrylate, lauryl methacrylate, tridecyl methacrylate, oleyl methacrylate, stearyl methacrylate, methoxyethyl methacrylate, butoxyethyl methacrylate, cyclohexyl methacrylate, benzyl methacrylate, tetrahydrofurfuryl methacrylate, 2-hydroxyethyl methacrylate, and 2-hydroxypropyl methacrylate, aromatic vinyl monomers such as styrene, α-methylstyrene, vinyltoluene, paramethylstyrene, and chlorostyrene, monoalkyl esters or dialkyl esters of unsaturated dibasic acids such as maleic acid, fumaric acid, or itaconic acid, nitrile-group-containing monomers such as acrylonitrile and methacrylonitrile, vinyl esters such as vinyl acetate and vinyl propionate, and unsaturated carboxylic acids such as acrylic acid, methacrylic acid, maleic anhydride, fumaric acid, itaconic acid, and crotonic acid, mixtures thereof and the like. Among the above-mentioned various ethyleneic unsaturated monomers, acrylic acid esters and methacrylic acid esters are especially preferred; also, to combine the use of aromatic vinyl monomers in the amount of 0 to 30 weight % of the total monomers with the acrylic acid ester or methacrylic acid ester improves gloss; also, to combine the use of a nitrile-group-containing monomer in the amount of 5 to 30 weight % of the total monomers with the acrylic acid ester, methacrylic acid ester, or aromatic vinyl monomer is especially preferred to speed polymer formation.

The isocyanates-group-containing copolymer preferably has a number-average molecular weight of 1,000 to 20,000. Synthesis is possible under the presence of a polymerization initiator which generates radicals in an inert solvent by either of the solution polymerization method, bulk polymerization method, suspension polymerization method, and emulsion polymerization method, but the solution polymerization method or bulk polymerization method in a system where water is absent is especially preferred.

The ketimine component (b) is one wherein at least one of the amino groups of a polyamine compound which possesses at least two primary amino groups has been capped by reaction with a ketone. These can be obtained by effecting dehydration reaction of an aliphatic amine such as ethylenediamine, trimethylenediamine, tetramethylenediamine, 1,6-hexamethylenediamine, nonamethylenediamine, and diethylenetriamine, alicyclic diamines such as isophoronediamine, 4,4'-bisaminomethylcyclohexane, 4,4'-diaminodicyclohexylpropane, hydrogenated xylylenediamine, and dipentenediamine, an alicyclic diamine such as α,α,α',α'-tetramethylxylenediamine, or a diamine where the amino group is not directly bonded to the aromatic ring, such as α,α,α',α'-tetramethylxylylenediamine and xylylenediamine, with a ketone such as acetone, methyl ethyl ketone, methyl isobutyl ketone, cyclohexanone, and isophorone. It is preferred that all of the amino groups of a polyamine compound be ketimized, but only can one amino group in the molecule need be reacted.

The ketimine compound (b) is a latent amino compound which releases ketone in the presence of moisture and reverts to an amine, and it does not react with the aforementioned component (a) in a coating material where water is not present, but when it has been coated on a surface to be covered, the ketimine reacts with moisture from the air and reverts to the amine, which forms a tough crosslinked covering film by immediately reacting with the isocyanate groups in the polymer (a).

The isocyanate-group-containing polymer (a) and the ketimine compound (b) defined in claim 1 are mixed and used in weight proportions such that an equivalent quantity of the isocyanate groups of (a) and an equivalent quantity of the amino groups (total of ketimine and free amino groups) of the ketimine compound (b) are within the range of 1: .06 to 1: 1.2, and especially preferably 1: 0.7 to 1: 1(—NCO to —$NH_2$).

The aforementioned isocyanate-group-containing polymer(a) and ketimine compound (b) are usually used by dissolving them in an organic solvent which does not contain water or active hydrogen. Suitable solvents are widely available. Illustratively, esters such as methoxyethyl acetate, toluene, and the like, can be employed. Besides being provided for actual use as a clear varnish, they can have mixed and dispersed

therein various types of inorganic pigments for coloring such as titanium oxide, iron oxide, carbon black, and phthalocyanine blue, inorganic fillers such as calcium carbonate, barium sulfate, talc, alumina, silica, glass fibers, bentonite, and also processing aids such as leveling aids, defoaming aids, and dispersing aids.

Coatings produced from the moisture-hardening type compositions according to this invention excel in hardening properties in spite of the fact that the usable time is long. They do not develop coating film defects such as foaming even under an environment of high humidity. In addition, the coating films excel in weather resistance and flexibility, and they can be used widely for products made of metal, wood, plastic, and cement, as well as for pre-formed organic covering films and the like.

Description of the Preferred Embodiments

The following non-limiting examples illustrate the invention:

Ketimines were prepared in a known manner by reacting a ketone, e.g. acetone or methyl isobutyl ketone, with a polyamine, e.g., ethylenediamine, 1,6-hexamethylenediamine, or 1,4-bis(aminomethyl)-cyclohexane in toluene as a solvent. The water of reaction was optionally removed, after a few hours of heating the mixture at above 80°C, or, after several days of standing at room temperature, by treatment with a molecular sieve.

Prepolymer A

A mixture of 300.4 g (1.23 moles) m-TMXDI, 50 g (0.373 mole) trimethylolpropane and 0.015% dibutyltin dilaurate (on total charge) was heated for 4 h at 80°C under dry nitrogen, to provide an adduct or prepolymer containing 15.9% NCO.

Prepolymer B

A mixture of 259 g (1.06) p-TMXDI, 500 g (0.515 mole) poly(tetramethylene ether) glycol of number-average molecular weight 970, and 0.010% dibutyltin dilaurate (on total charge) was heated for 4 h at 80°C under dry nitrogen to provide a prepolymer containing 5.9% NCO.

Examples 1—5

To provide coating compositions, the prepolymers prepared as shown above were diluted with methoxyethyl acetate solvent and mixed with a ketimine, or for control purposes with the corresponding amine. The ratio of NCO equivalents to amine equivalents (actually present in the amine or potentially available from the ketimine) was about 1: 0.95 in each case. Where the mixture had sufficient pot life, films were cast from it. The formulations used and the results obtained are set forth in Table 1.

TABLE 1
Compositions of isocyanate-group-containing prepolymer and ketimine

| Example | 1A* | 1 | 2 | 3A* | 3 | 4 | 5A* | 5 |
|---|---|---|---|---|---|---|---|---|
| Composition (parts by weight) | | | | | | | | |
| Prepolymer of 37.4 pbw α,α,α′,α′-tetra-methyl-meta-xylylene, diisocyanate and 62.6 pbw polytetramethylene ether glycol ethylenediamine | 100 | 100 | 100 | 100 | 100 | 100 | 100 | 100 |
| Ethylenediamine | 6.54 | — | — | — | — | — | — | — |
| Ethylenediamine/acetone ketimine (water not removed) | — | 19.2 | — | — | — | — | — | — |
| Ethylenediamine/acetone ketimine (water removed) | — | — | 15.3 | — | — | — | — | — |
| 1,6-hexanediamine | — | — | — | 7.7 | — | — | — | — |
| 1,6-hexanediamine/acetone ketimine (water not removed) | — | — | — | — | 15.4 | — | — | — |
| 1,6-hexanediamine/acetone ketimine (water removed) | — | — | — | — | — | 21.1 | — | — |
| 1,4-bis(aminomethyl)cyclohexane | — | — | — | — | — | — | 9.5 | — |
| 1,4-bis(aminomethyl)cyclohexane/-acetone ketimine (water removed) | — | — | — | — | — | — | — | 14.8 |
| Properties | | | | | | | | |
| Pot life (min.) | 1.5 | 1.5 | 4.5 | 0.17 | 0.25 | 25 | 0.2 | 25 |
| Dry-to-Touch Time (min) | no film | 90 | 180 | no film | 5 | 90 | no film | 90 |

*Control.

The data in Table 1 demonstrate that if the free amine, instead of the ketimine, was used, the pot life of the composition was so short as to make the preparation of coating films impractical. On the other hand, with the ketimines, particularly those from which the water of reaction has been removed, reasonable pot lives are obtained and films, were obtained which were dry to touch in not over three hours at room temperature.

Examples 6—8

A prepolymer was prepared from α,α,α',α'-tetramethyl-metaxylylenediisocyanate (m-TMXDI) and a commercial hydroxyl-containing polyacrylate, G-Cure 867, (Henkel Company) by reaction of the two materials in the proportions of one mole of m-TMXDI for each equivalent of OH in the polyacrylate. Conditions and catalyst were as in Examples 1—5. Portions of the solution were mixed with a toluene of the respective ketimine in the proportion of one ketimine nitrogen for each equivalent of NCO in the m-TMXDI-reacted prepolymer. The formulations used and the results obtained are set forth in Table 2:

TABLE 2

Compositions of Isocyanate-containing-polymer and ketimines

| Example | 6 | 7 | 8 |
|---|---|---|---|
| Composition (parts by weight) | | | |
| α,α,α',α'-tetramethyl-meta-xylylene diisocyanate prepolymers with hydroxy-functional polyacrylate | 84.0 | 81.1 | 89.0 |
| 1,4-bis(aminomethyl)cyclohexane/acetone ketimine | 16.0 | — | — |
| 1,6-hexamethylenediamine/methylisobutyl ketone ketimine | — | 18.9 | — |
| Ethylenediamine/acetone ketimine | — | — | 10.7 |
| Modaflow (flow promoter) [a] | — | 0.5 | 0.5 |
| Cellulose acetate butyrate, [b] | — | 0.5 | 0.5 |
| Solvent | | | |
| Properties | | | |
| Pot life (minutes) | 2.5 | 2.0 | 1.0 |
| Dry-to-touch (minutes) | 5.0 | 3.0 | 2.0 |
| Film Properties, 1 week cure at 23°C. | 25.4 | 25.4 | 25.4 |
| Thickness, (mil) μm | (1.0) | (1.0) | (1.0) |
| Pencil hardness | H—2H | H—2H | H—2H |
| 60° Gloss | 41 | 133 | 114 |
| Methylethyl ketone, rubs to remove | 200 | 50 | <200 |
| Tape removal adhesion (0 to 10 (perfect)) | 7 | 7 | 7 |

a. parts of a 10% solution in toluene
b. parts by a 20% solution in methyl ethyl ketone.

Examples 9—14

A prepolymer was prepared from α,α,α',α'-tetramethyl-meta-xylenediisocyanate and a polycaprolactone of m.w. 1000 by the general procedure used to make Prepolymer B above and designated PCL—TMXDI. A prepolymer of m-TMXDI and 1,1,1-trimethylolpropane was made in a similar manner by reacting the two materials in a molar ratio of 3:1, and designated TMP—TMXDI. Various proportions of the prepolymers were mixed, and combined with the ketimine of ethylenediamine and acetone (water removed) described above, in the proportions of one equivalent of ketimine nitrogen for each equivalent of NCO groups. The final mixtures were diluted to 50% solids in methoxyethyl acetate to provide a coating

composition. The composition was drawn into films on aluminum test panels. These were allowed to stand for two weeks at room temperature before testing. The formulations used and the results obtained are set forth in Table No. 3.

TABLE 3
Compositions of isocyanate-containing prepolymers and ketimines

| Example | 9 | 10 | 11 | 12 | 13 | 14 |
|---|---|---|---|---|---|---|
| (Composition (equivalents) | | | | | | |
| Prepolymer | 1 | 1 | 1 | 1 | 1 | 1 |
| PCL—TMXDI (pbw) | (100) | (90) | (70) | (50) | (30) | (0) |
| TMP—TMXDI (pbw) | (00) | (10) | (30) | (50) | (70) | (100) |
| Ketimine of ethylenediamine/acetone | 1 | 1 | 1 | 1 | 1 | 1 |
| Properties | | | | | | |
| Pot life (min.) | >60 | >60 | 30 | 10 | <12 | <2 |
| Dry-to-touch time (min.) | ND | ND | 45 | 20 | 12 | 2 |
| Film Properties | | | | | | |
| Thickness, (mils) μm | 20.3 μm | 17.8 | 20.3 | 20.3 | 17.8 | 17.8 |
| | (0.8) | (0.7) | (0.8) | (0.8) | (0.7) | (0.7) |
| Pencil hardness | F—H | H—2H | H—2H | 2H—3H | 2H—3H | 3H—4H |
| Reverse impact resistance, J (in-lb.) | >8.81 | >8.81 | 6.78 | 7.91 | >7.91 | >5.56 |
| | (>78) | (>78) | (60) | (70) | (>70) | (>50) |
| Mendrel flex 3.175 mm (1/8 in.), P-pass, F-fail | P | P | P | P | P | F |
| Adhesion by tape test (0—10 (perfect) | 10 | 10 | 10 | 10 | 10 | 10 |

The results in Table 3 show that by suitable adjustment of functionality in the composition it is possible to obtain good hardness and flexibility and yet achieve good solvent resistance as well, together with other valuable properties and good curing at reasonable times at room temperature.

Preparation 1 Comparative

A trifunctional-type polycaprolactone of molecular weight 550, made by Daicel Chemical Industries, No. 305, 550 parts by weight, 594 parts by weight of isophorone diisocyanate, and 763 parts by weight of ethyl acetate as solvent were added to a reactor which was equipped with a reflux condensing tube, stirrer, and thermometer, and then heated and mixed at 90°C for 7 hours. There was obtained a 60 weight % solution of an isocyanate-terminated polyester polyurethane resin. The quantity of isocyanate groups was 1.26 equivalents in 1000 g. of solution.

Preparation 2 Comparative

A mixture of 690 parts by weight of a terminal hydroxyl group polyester resin of 1,4-butanediol and adipic acid (number-average molecular weight 690), 134 parts by weight of trimethylolpropane, and 854 parts by weight of α,α,α′,α′-tetramethylmetaxylylenediisocyanate was added to the reactor of preparation 1, then after heating at 120°C for 5 hours. This was diluted by adding 560 parts by weight of ethyl acetate and 560 parts by weight of toluene. There was obtained a 60 weight % solution of an isocyanate-terminated polyester polyurethane resin. The quantity of isocyanate groups was 0.72 equivalents in 1000 g. of solution.

Preparation 3 Comparative

A mixture of 1000 parts by weight of polytetramethylene glycol of molecular weight 1000, 171 parts by weight of trishydroxyethyl isocyanurate, 168 parts by weight of hexamethylene diisocyanate, and 750 parts by weight of hydrogenated diphenylmethane diisocyanate $H_{12}$ (MDI) was added to the reactor which was used in Preparation 1, then after reacting at 80°C for 2 hours while heating and stirring and further at 120°C for 3 hours, this was diluted by adding ethyl acetate 745 weight parts and toluene 745 weight parts, there was obtained a 60 weight % of an isocyanate-terminated polyether polyurethane resin. The quantity of isocyanate groups was 1.44 equivalents in 1000 g. of solution.

Preparation 4 Comparative

A mixure of 400 parts by weight of a polypropylene glycol of a mixture of molecular weight 400, 530 parts by weight of a linear polycaprolactone of molecular weight 530 (trade number 205, made by Daicel Chemical Industries, Ltd.), and 981 parts by weight of α,α,α′,α′α′′,α′′-hexamethylmesitylene triisocyanate was added to the reactor which was used in Preparation 1, then reaction was carried out at 120°C for 5 hours and this was diluted by adding methyl ethyl ketone 635 g and toluene 635 g. There was thereby obtained a 60% weight solution of an isocyanated-terminated polyurethane resin which possessed both a polyether and polyester skeleton. The quantity of isocyanate groups was 1.57 equivalent in 1000 g. of solution.

Preparations 5—8

The respective polyamines, ketones, and other raw materials of Preparations 5—8 which are given in Table 4 were charged into a reactor which was equipped with a stirrer, a condenser with a water separating apparatus, and a thermometer, and reaction was conducted for 8 hours at 110 to 115°C in the case of 5—7 and at 75°C in the case of 8. In the case of Preparation 5—7, the solvent was refluxed and the water which formed was separated and removed; and in the case of Preparation 8, the formed water was removed by causing it to become adsorbed by a molecular sieve, and by filtering the molecular sieve off after the reaction. The reaction products of the respective preparations were further concentrated under reduced pressure and were so adjusted as to obtain a 50 weight % solution. Conversion of ketimine was measured by nuclear magnetic resonance analysis, and the total amino group content quantity (the total of ketimine and free amino groups is expressed as the number of equivalents in 1000 g. of solution) of the respective reaction product solutions was measured by the hydrochloric acid titration method. The results are presented in Table 4.

TABLE 4
Preparation of Ketimines

| Preparation | 5 | 6 | 7 | 8 |
|---|---|---|---|---|
| Composition (parts by weight) | | | | |
| Ethylenediamine | 60 | — | — | — |
| Hexamethylenediamine | — | 116 | — | — |
| Isophoronediamine | — | — | 169 | — |
| Hydrogenated xylylenediamine | — | — | — | 142 |
| Methyl isobutyl ketone | 500 | 500 | 500 | — |
| Methyl ethyl ketone | — | — | — | 360 |
| Toluene | 100 | 100 | 100 | — |
| Molecular sieve | — | — | — | 100 |
| Ketimine conversion rate (mol %) | 96 | 94 | 58 | 80 |
| Amine content of 50% solution (equivalent/1000 g) | 4.59 | 3.70 | 3.79 | 4.39 |

Examples 15—23

The following general procedure was used for the coating composition. To 167 parts by weight of the respective isocyanated-terminated polyurethane resin solutions which were prepared in Preparations 1 to 4, were added, titanium oxide, 100 parts by weight, toluene, 83 parts by weight, ethyl acetate, 70 parts by weight, ethylene glycol monoethyl acetate, 30 parts by weight, and a silicone system leveling agent 0.1 parts by weight, then dispersing was effected with a sand mill for 1 hour, after which the resulting product was removed. There was obtained pigment dispersions of isocyanate-terminated polyurethane resins.

Next, to 45 parts by weight of the respective above-mentioned pigment dispersions were added to the respective ketimine compound solutions of Preparations 5 to 8, given in Table 4, in the proportions of compounding given in Table 5. Thus were prepared the compositions for moisture-hardening-type coverings of this invention, Examples 15—23 of Table 5:

TABLE 5
Isocyanate-containing Prepolymers and Ketimines

| Example | Type of Isocyanate-terminated polyurethane resin | Amount of Ketimine compound solution compounded | | | |
|---|---|---|---|---|---|
| | | Preparation 5 | Preparation 6 | Preparation 7 | Preparation 8 |
| 15*) | Preparation 1 | 4.5 | — | | — |
| 16*) | Preparation 1 | — | 5.1 | — | — |
| 17*) | Preparation 1 | — | — | 5.5 | — |
| 18*) | Preparation 1 | — | — | — | 3.8 |
| 19 | Preparation 2 | — | 3.2 | — | — |
| 20*) | Preparation 3 | 4.2 | — | — | — |
| 21*) | Preparation 3 | — | 5.8 | — | — |
| 22*) | Preparation 4 | — | 7.0 | — | — |
| 23*) | Preparation 4 | — | — | — | 5.4 |
| 23A*) | Preparation 1 | — | not used | — | — |
| 23B*) | Preparation 2 | — | not used | — | — |
| 23C | Preparation 2 | — | 5.8 | — | — |

*) Comparison

Preparation 1A

A 60 weight % solution of the isocyanate-terminated polyester resin which was produced in Preparation 1 was used to prepare a pigment dispersion by proceeding as outlined above; then, to 45 parts by weight of the pigment dispersion, was added 0.05 parts by weight of dibutylin dilaurate as a reaction accelerator; and a coating material of moisture-hardening-type was prepared for comparison, (Example 23A*, Table 5.

Preparation 2A Comparative

To 550 parts by weight of a trifunctional polycaprolactone of molecular weight 550, was added 470 parts of toluylene diisocyanate, and 680 weight parts of ethyl acetate as solvent in a reactor similar to that in Preparation 1, then the mixture was heated and mixed at 70°C for 6 hours. There was obtained a 60 weight % solution of an aromatic isocyanate-terminated polyester polyurethane. The content quantity of isocyanate groups was 1.42 equivalents in 1000 g. of solution.

A pigment dispersion was prepared from this resin solution in exactly the same manner as described above, and a coating material of moisture hardening type was prepared for comparison (Example 23B, Table 5) by adding 0.05 parts by weight of dibutyltin dilaurate in 45 parts by weight of this pigment dispersion.

Preparation 3A Comparative

A comparison coating material of moisture hardening type (Example 23C* Table 5) was prepared by adding 5.8 parts by weight of the ketimine compound (solution of Preparation 6); to 45 parts by weight of the pigment dispersion which was prepared in Preparation 2A.

The respective coating materials of Examples 15—23 and 23A—23C, given in Table 5, were spray-coated on tin sheets of 0.3 mm thickness so that the dried coating film thickness would become about 30 µm and, after drying in a state of 25°C and relative humidity 60%, the physical properties of the coating films were judged. Also, these samples were left standing under an environment of 40°C and relative humidity 90% and the coating film state condition was judged. Furthermore, the usable time of each coating material was examined. Each coating material was sealed into a glass bottle and the time to gelation at 25°C was measured.

The results of the foregoing evaluations are given in Table 6.

TABLE 6
Properties

| Example | Gelling time (hours) | Hardening Property (25°C, 60% RH)[a] 8 hrs. | 16 hrs. | 24 hrs. | Coated Surface State Under High Humidity[b] | Pencil Hardness[c] | Coating Film Elongation[d] | Gloss (60°) | Weather Resistance Gloss Retention Rate[e] |
|---|---|---|---|---|---|---|---|---|---|
| 15*) | 40 | 50< | 50< | 50< | Good | 3H | 120% | 92 | 84 |
| 16*) | 52 | 50< | 50< | 50< | Good | 2H | 200% | 95 | 84 |
| 17*) | 60 | 40 | 50< | 50< | Good | 3H | 140% | 95 | 86 |
| 18*) | 32 | 50< | 50< | 50< | Good | 3H | 80% | 95 | 86 |
| 19*) | 96 | 32 | 50< | 50< | Good | 2H | 300% | 97 | 87 |
| 20*) | 48 | 50< | 50< | 50< | Good | 3H | 70% | 95 | 82 |
| 21*) | 54 | 50< | 50< | 50< | Good | 3H | 120% | 93 | 79 |
| 22*) | 32 | 50< | 50< | 50< | Good | 3H | 80% | 92 | 72 |
| 23*) | 28 | 50< | 50< | 50< | Good | 3H | 50% | 90 | 68 |
| 23A*) | 120 | 5 | 8 | 20 | Swelled in parts | 2B | 40% | 96 | 75 |
| 23B*) | 72 | 18 | 30 | 50< | Entire surface swelled | F | 25% | 92 | 18 |
| 23C*) | 12 | 50< | 50< | 50< | Swelled in parts | 3H | 60% | 88 | 21 |

*) comparative

Notes:
a. Further hardening property, the coated film surface was rubbed with a cloth dipped in methyl ethyl ketone, and the property was judged by the number of times rubbed until the coating film detached.
b. For the coated surface stated under high humidity judgment was made after letting stand 1 day under an environment of 40° and 90% relative humidity after spraying.
c. Pencil hardness was evaluated 1 week after coating.
d. The coating film was detached by the mercury amalgam method one week after coating, and the elongation at breaking was measured with a tensile testing instrument.
e. Weather resistance was judged by the gloss retention rate (%) after irradiating with a QUV tester for 500 hours.

Preparations 9—13

Toluene, 80 parts by weight, and methyl isobutyl ketone, 20 parts by weight, were introduced into a reactor which was equipped with a stirrer, a reflux cooling tube, a thermometer, and a dropping vessel; after heating to 85°C, a mixture consisting of the respective monomers and polymerization initiators indicated by the respective numbers in Table 7 was dripped from the dropping vessel taking 4 hours, while stirring. The reaction solution was maintained at 85 to 90°C and, at the time of termination of the dripping, 0.3 weight parts of the polymerization initiator, azobisisobutyronitrile, was further added and by continuing the reaction at the above-mentioned temperature for four hours, there was obtained a solution of an isocyanate-group-containing copolymer. The solids component content, viscosity, and quantity of isocyanate group contained (equivalent quantity/1000 g solution) of the copolymer solutions which were obtained in the respective preparation numbers are also given in Table 7:

TABLE 7

| Preparation | 9*) | 10*) | 11*) | 12*) | 13 |
|---|---|---|---|---|---|
| m-isopropenyl-α,α-dimethyl benzyl isocyanate | 15 | 25 | — | — | — |
| p-isopropenyl-α,α-dimethylbenzyl isocyanate | — | — | 15 | — | — |
| m-ethylenyl-α,α-dimethylbenzyl isocyanate | — | — | — | 30 | — |
| Isopropenyl-α,α,α',α'-tetra-methylxylylene diisocyanate | — | — | — | — | 10 |
| Methyl methacrylate | 40 | — | 20 | — | 30 |
| n-butyl methacrylate | 20 | — | — | — | 10 |
| Ethyl acrylate | — | 15 | — | 20 | — |
| n-butyl acrylate | 25 | 20 | 40 | 20 | 40 |
| Cyclohexyl methacrylate | — | — | — | 10 | — |
| Styrene | — | 20 | — | 20 | — |
| p-methylstyrene | — | — | 15 | — | — |
| Acrylonitrile | — | 20 | 10 | — | 10 |
| Azobisisobutyronitrile | 1 | 1 | 1 | 1 | 1 |
| Solid component content (weight %) | 48.5 | 50.2 | 50.0 | 48.7 | 49.0 |
| Viscosity ($10^{-3}$ Pa·s) (cps/25°C) | 1100 | 2200 | 1900 | 1700 | 900 |
| Isocyanate content quantity (eg/1000 g) | 0.37 | 0.62 | 0.37 | 0.80 | 0.35 |

*) comparative

Examples 24—33

As a general procedure, to 100 parts by weight of each of the copolymer solutions of Preparations 9 to 13 which were given in Table 7, were added titanium oxide 50 parts by weight, toluene 50 parts by weight, ethyl acetate 50 parts by weight, and a silicon system leveling agent 0.1 parts by weight; dispersing was conducted for 1 hour with a sand mill and there was obtained a pigment dispersion of an isocyanate-group-containing copolymer in each case.

Next, according to the compounding proportions shown in Table 8, the respective ketimine compound solutions given in Table 4 were mixed with 27 weight parts of the respective above-mentioned pigment dispersions, and the respective coating materials consisting of the compositions for covering of this invention were prepared.

TABLE 8
Isocyanate-containing Prepolymers and Ketimines

| Examples Nos. | Preparation number of isocyanate-group-containing polymer in pigment dispersion | Quantity of Ketimine compound solution compounded | | | |
|---|---|---|---|---|---|
| | | Preparation 5 | Preparation 6 | Preparation 7 | Preparation 8 |
| 24*) | Preparation 9 | — | 1.0 | — | — |
| 25*) | Preparation 9 | — | — | 0.9 | — |
| 26*) | Preparation 10 | 1.3 | — | — | — |
| 27*) | Preparation 10 | — | 1.6 | — | — |
| 28*) | Preparation 10 | — | — | 1.6 | — |
| 29*) | Preparation 10 | — | — | — | 1.4 |
| 30*) | Preparation 11 | 0.8 | — | — | — |
| 31*) | Preparation 12 | — | 1.8 | — | — |
| 32 | Preparation 13 | — | 1.0 | — | — |
| 33*) | Coating material for Comparison | — | — | — | 0.8 |

*) Comparative

Comparative Preparation 33A

To 100 weight parts of a 50% toluene solution of a copolymer of methyl methacrylate, styrene, butyl acrylate, and 2-hydroxyethyl methacrylate (the hydroxyl group content quantity in the 50% solution was 0.62 equivalent per 1000 g, and the viscosity was 1500 $10^{-3}$Pa (cps)/25°C), was added titanium oxide 50 parts by weight, toluene 50 parts by weight, ethyl acetate 50 parts by weight, ethylene glycol monoethyl ether acetate 20 parts by weight, and a silicone system leveling agent 0.1 part by weight; dispersing was conducted for 1 hour with a sand mill and there was obtained a pigment dispersion of an isocyanate-group-containing copolymer. To 27 parts by weight, of this pigment dispersion, was added 1.4 weight parts of a 75% ethyl acetate solution of a modified hexamethylene diisocyante (trade name Desmodur®N of the Bayer Company) and there was thus prepared a coating material for comparison.

Each of the above-mentioned coating materials 24 to 33A was coated with a spray onto a 0.8 mm steel sheet so that the dried coating film would be about 30 µm thick, and drying was conducted at 25°C, 50% relative humidity. Also the usable time for each coating material was tested by sealing the coating material in a glass bottle and measuring the time until gelation at 25°C. The test results for the respective coating materials and coating films are given in Table 9:

TABLE 9
Isocyanate-containing Prepolymers and Ketimines

| Examples | Properties: Usable Time (gelling time) Hours | Hardening property 1 Day Later | 2 Days Later | 4 Days Later | Pencil Hardness | Flexibility Erichsen mm | Gloss 60°C | Weather resistance Gloss retention % |
|---|---|---|---|---|---|---|---|---|
| 24*) | 48 | 50< | 50< | 50< | 2H | 6.0 | 89 | 90 |
| 25*) | 50 | 45 | 50< | 50< | 2H | 4.5 | 91 | 92 |
| 26*) | 24 | 50< | 50< | 50< | 3H | 3.5 | 90 | 84 |
| 27*) | 28 | 50< | 50< | 50< | 2H | 5.8 | 92 | 83 |
| 28*) | 30 | 50< | 50< | 50< | 2H | 4.7 | 92 | 87 |
| 29*) | 18 | 50< | 50< | 50< | 3H | 3.0 | 93 | 80 |
| 30*) | 36 | 50< | 50< | 50< | 2H | 4.0 | 92 | 88 |
| 31*) | 32 | 50< | 50< | 50< | 3H | 5.2 | 94 | 85 |
| 32 | 60 | 40 | 50< | 50< | 2H | 6.3 | 87 | 90 |
| 33*) | 32 | 36 | 50< | 50< | 2H | 4.8 | 89 | 83 |
| 33A*) | 9 | 12 | 20 | 40 | 2H | 1.8 | 90 | 78 |

** See Footnote to Table 6
* comparative

Many variations will suggest themselves to those skilled in this art in light of the above, detailed description.

**Claims**

1. A moisture-curable composition comprising the components.

a. (i) A prepolymer polyurethane reaction product of an α,α,α',α'-tetramethylxylylene diisocyanate and at least one polyol, said prepolymer having at least two isocyanate groups unreacted, or

(ii) a prepolymer vinyl addition product of an isocyanate having the formula

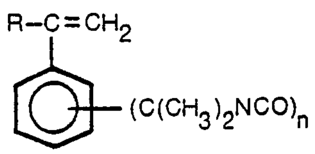

wherein R is hydrogen or alkyl and n is one or two and at least one other ethylenic unsaturated comonomer; and

b. a ketimine of a polyamine with at least two primary amino groups having at least one of its amino groups blocked by reaction with a ketone.

2. A mixture defined by Claim 1 wherein the component a. is a polyurethane defined by a. (i).

3. A mixture defined by Claim 2 wherein the component a. (i) is the reaction product of the defined isocyanate with one or more of a polyester or a polyether or a polyacrylate or a polymethacrylate, having polyhydroxyl functionality.

4. A mixture defined by Claim 1 wherein the component a. is a polyurethane reaction product defined in a. (i) wherein the polyol is selected from the group consisting of 1,1,1-trimethylol propane, polytetramethylene ether glycol, or a polycaprolactone, or a mixture of any of the foregoing.

5. A mixture defined by Claim 1 wherein the component a, is the prepolymer defined by a. (ii) with from 2 to 50 percent by wt of units from the defined isocyanate monomer and the remainder of units from other defined monomers.

6. A mixture defined by Claim 1 wherein the defined component b. is a ketimine derived from an aliphatic diamine or polyamine and an aliphatic ketone.

7. A mixture defined by Claim 6 wherein the amine is selected from ethylene diamine, 1,6-hexanediamine and 1, 4-bis (aminomethyl) cyclohexane and the ketone is acetone or methyl· isobutyl ketone.

8. A mixture defined by Claim 6 wherein the defined component b. is substantially free of water.

9. A composition defined by Claim 2 which further comprises a liquid solvent for the defined components (a) and (b), said solvent being substantially non-reactive with the defined isocyanate.

10. A method for coating a substrate which comprises casting a film of the mixture defined by Claim 9 on the substrate and curing the film by exposure to air.

**Patentansprüche**

1. Eine mittels Feuchtigkeit härtbare Masse, umfassend die Komponenten:

(a) (i) ein Präpolymerpolyurethan-Reaktionssprodukt von einem α,α,α',α'-Tetramethylxylylendiisocyanat und mindestens einem Polyol, wobei das Präpolymere mindestens zwei unreagierte Isocyanatgruppen aufweist, oder

(ii) ein Präpolymervinyl-Additionsprodukt eines Isocyanats der Formel

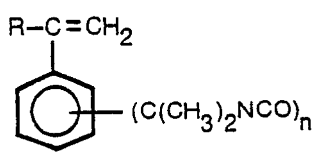

wobei R für Wasserstoff oder Alkyl steht und n eins oder zwei bedeutet, und mindestens einem weiteren ethylenisch ungestättigten Comonomeren; und

(b) ein Ketimin von einem Polyamin mit mindestens zwei primären Aminogruppen, wobei mindestens eine seiner Aminogruppen durch Umsetzung mit einem Keton blockiert ist.

2. Mischung gemäß Anspruch 1, wobei die Komponente (a) ein Polyurethan ist, wie in (a) (i) defininiert.

3. Mischung gemäß Anspruch 2, wobei die Komponente (a) (i) ein Reaktionsprodukt des definierten Isocyants mit einem oder mehreren von einem Polyester oder einem Polyether oder einem Polyacrylat oder einem Polymethacrylat ist, welche Polyhydroxyl-Funktionalität aufweisen.

4. Mischung gemäß Anspruch 1, wobei die Komponente (a) ein Polyurethan-Reaktionsprodukt ist, wie

in (a) (i) definiert, wobei das Polyol ausgewählt ist aus der Gruppe, bestehend aus 1,1,1-Trimethylolpropan, Polytetramethylenetherglykol oder Polycaprolacton, oder eine Mischung beliebiger der vorstehend erwähnten.

5. Mischung gemäß Anspruch 1, wobei die Komponente (a) das Präpolymere ist, wie durch (a) (ii) definiert, mit von 2 bis 50 Gew.-% von Einheiten aus dem definierten isocyanatmonomeren und dem Rest der Einheiten aus anderen definierten Monomeren.

6. Mischung gemäß Anspruch 1, wobei die definierte Komponente (b) ein Ketimin ist, das sich von einem aliphatischen Diamin oder Polyamin und einem aliphatischen Keton ableitet.

7. Mischung gemäß Anspruch 6, wobei das Amin ausgewählt ist aus Ethylendiamin, 1,6-Hexandiamin und 1,4-bis(aminomethyl)cyclohexan und das Keton Aceton oder Methylisobutylketon ist.

8. Mischung gemäß Anspruch 6, wobei die definierte Komponente (b) im wesentlichen frei von Wasser ist.

9. Zusammensetzung gemäß Anspruch 2, die ferner ein flüssiges Lösungsmittel für die definierten Komponenten (a) und (b) umfaßt, wobei das Lösungsmittel mit dem definierten Isocyanat im wesentlichen nichtreaktiv ist.

10. Verfahren zur Beschichtung eines Substrats, umfassend das Aufbringen eines Films aus der durch Anspruch 9 definierten Mischung auf das Substrat und Härten des Films, indem man ihn der Luft aussetzt.

**Revendications**

1. Composition durcissable par l'humidité comprenant les composants:

a. (i) un prépolymère polyuréthanne qui est le produit réactionnel d'un diisocyanate de α,α,α',α'-tétraméthylxylylène et d'au moins un polyol, ledit prépolymère comportant un moins dexu groupes isocyanate n-ayant pas réagi, ou

(ii) un prépolymère qui est le produit d'addition vynilique d'un isocyanate répondante à la formule

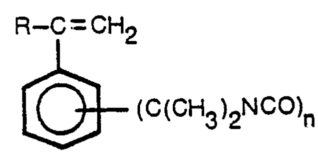

dans laquelle R est l'hydrogène ou un groupe alkyle et n est un ou deux, et d'au moins un autre comonomère insaturé éthylénique; et

b. une cétimine d'une polyamine ayant au moins deux groupes amino primaires dont l'un au moins des groupes amino est bloqué par réaction avec une cétone.

2. Mélange défini par la revendication 1, dans lequel le composant a. est un polyuréthanne défini par a. (i).

3. Mélange défini par la revendication 2, dans lequel le composant a.(i) est le produit réactionnel de l'isocyanate défini avec l'un ou plusieurs d'un polyester, d'un polyéther, d'un polyacrylate et d'un polyméthacrylate, ayant une fonctionnalité polyhydroxyle.

4. Mélange défini par la revendication 1, dans lequel le composant a. est un produit réactionnel du type polyuréthanne défini en a. (i) dans lequel le polyol est choisi dans le groupe formé par le 1,1,1-triméthylolpropane, un polyoxytétraméthylène-glycol ou une polycaprolactone, ou un mélange de n-importe lesquels des précédents.

5. Mélange défini par la revendication 1, dans lequel le composant a. est le prépolymére défini par a. (ii) qui possède 2 à 50 pour cent en poids de motifs provenant de l'isocyanate monomère défini et dont le reste des motifs provient des autres monomères définis.

6. Mélange défini par la revendication 1, dans lequel le composant b. défini est une cétimine dérivée d'une diamine ou polyamine aliphatique et d'une cétone aliphatique.

7. Mélange défini par la revendication 6, dans lequel l'amine est choisie parmi l'éthylènediamine, la 1,6-hexanediamine et le 1,4-bis(aminométhyl)cyclohexane et la cétone est l'acétone ou la méthyl-isobutylcétone.

8. Mélange défini par la revendication 6, dans lequel le composant b. défini est sensiblement exempt d'eau.

9. Composition définie par la revendication 2, qui comprend de plus un solvant liquide pour les composants (a) et (b) définis, ledit solvant étant sensiblement non réactif vis-à-vis de l'isocyanate défini.

10. Procédé pour revêtir un substrat, qui consiste à couler une pellicule du mélange défini par le revendication 9 sur le substrat et à faire durcir la pellicule par exposition à l'air.